# NEUE EUROPÄISCHE PATENTSCHRIFT

(11) **EP 1 843 446 B2**
(45) Veröffentlichungstag und Bekanntmachung des Hinweises auf die Entscheidung über den Einspruch: **20.08.2014**
(45) Hinweis auf die Patenterteilung: 26.05.2010
(21) Anmeldenummer: 07104883.9
(22) Anmeldetag: 26.03.2007
(51) Int. Cl.: H04L 12/28

(54) **Anschlusseinrichtung für die Hausleittechnik**
Connecting assembly for electrical distribution in a building
Dispositif de connection pour distribution électrique dans un bâtiment

(30) Priorität: 05.04.2006 DE 202006005559 U
(43) Veröffentlichungstag der Anmeldung: 10.10.2007
(73) Patentinhaber: Zumtobel Lighting GmbH, 6850 Dornbirn (AT)
(72) Erfinder: Rüf, Karl-Heinz, 6850, Dornbirn (AT); Wohlgenannt, Rochus, 6850, Dornbirn (AT); Müller, Ralf, 88239, Wangen i.A. (DE); Roos, Peter, 86925, Fuchstal (DE); Voggesser, Manfred, 87509, Immenstadt (DE); Rausch, Zeno, 9424, Rheineck (CH)
(74) Vertreter: Thun, Clemens

(56) Entgegenhaltungen:
- EP-A- 1 489 718
- EP-A2- 0 652 689
- EP-A2- 0 982 642
- EP-B1- 0 903 966
- WO-A-98/49699
- WO-A-2004/023624
- WO-A1-00/11915
- WO-A1-98/49699
- WO-A1-99/60804
- US-A- 4 719 446
- US-A1- 2004 002 792
- US-A1- 2004 051 485
- US-A1- 2004 124 338
- US-A1- 2004 212 324
- US-A1- 2005 131 554
- 'User Guide for the ES 9802 OUTPUT module'
- '4 Channel High Frequency Ballast controller & Power Switcher'
- 'A.C. supplied electronic ballasts for tubular fluorescent lamps - Performance requirements'

## Beschreibung

Die vorliegende Erfindung betrifft eine Anschlusseinrichtung für Hausleittechnik, welche gemäß dem Oberbegriff des Anspruchs 1 ausgestaltet ist.

Moderne Systeme zur Steuerung von verschiedenen Geräten der Hausleittechnik weisen üblicherweise ein Stromversorgungsnetz sowie ein Busleitungssystem auf, an welche die einzelnen Geräte angeschlossen werden. Über die Busleitungen erfolgt ein Datentransfer zwischen einer zentralen Steuereinheit des Hausleitsystems und den einzelnen Geräten, wobei die übermittelten Daten zum Schalten, Steuern und/oder Regeln der Geräte sowie zum Messen und Überwachen genutzt werden. Bei den verschiedenen Geräten bzw. Verbrauchern kann es sich allgemein um elektrische Geräte, Melde- oder Funktionsgeber handeln. Insbesondere besteht bei der Nutzung derartiger Systeme auch die Möglichkeit, ferngesteuert Lichtquellen oder Einrichtungen zur Helligkeitsregelung und Temperatursteuerung /-regelung zu betreiben.

Grundsätzlich bestünde die Möglichkeit, sämtliche Geräte bzw. Verbraucher unmittelbar über das Busleitungssystem mit der zentralen Steuereinheit des Hausleitsystems zu verbinden. Hierbei ergibt sich allerdings das Problem, dass teilweise sehr unterschiedliche Arten von Verbrauchern angesteuert werden sollen, welche auch dementsprechend unterschiedlich gestaltete Steuersignale benötigen. Dies würde einen äußerst komplexen Datentransfer über das Busleitsystem erfordern. Darüber hinaus besteht bei einigen Verbrauchern ohnehin nicht die Möglichkeit, diese über analoge oder digitale Steuerbefehle anzusteuern. In derartigen Fällen ist oftmals lediglich eine Ansteuerung über eine Steuerung der dem Verbraucher zu geführten Leistung möglich.

Um diese Probleme zu lösen, werden dementsprechend oftmals sog. Anschlusseinrichtungen eingesetzt, welche an verschiedenen Stellen eines Gebäudes angeordnet und unmittelbar mit dem Bus- und Stromversorgungsnetz verbunden sind. Diese Anschlusseinrichtungen stellen dann dezentrale Steuereinheiten dar, da sie jeweils mit den ihnen zugeordneten Verbrauchern verbunden sind und die von der zentralen Steuereinheit übermittelten Signale derart umsetzen, dass eine geeignete Ansteuerung der angeschlossenen Verbraucher ermöglicht ist. Derartige Anschlusseinrichtungen weisen also zunächst einerseits eine für die Kommunikation über das Busleitungssystem verantwortliche Zentraleinheit und andererseits Ausgangseinheiten auf, welche Ausgänge zum Anschließen der entsprechenden Verbraucher aufweisen. Eine derartige Anschlusseinrichtung ist bspw. aus der EP 1 282 348 A1 bekannt.

Wie bereits zuvor erwähnt wurde, können die zum Ansteuern der verschiedenen Verbraucher erforderlichen Steuersignale sehr unterschiedlicher Art sein. So ist bei einigen Verbrauchern bspw. lediglich ein Ein- und Ausschalten erwünscht, was mit Hilfe eines einfachen Steuersignals oder einer wahlweisen Unterbrechung bzw. Zurverfügungstellung der Stromversorgung erfolgen kann. Andere Verbraucher hingegen benötigen komplexere Steuersignale, um eine gewünschte Ansteuerung zu ermöglichen. So könnten bspw. als Verbraucher Lampenbetriebsgeräte eingesetzt werden, welche eine Steuerung der Helligkeit ermöglichen. Hierzu ist oftmals das Übertragen von digitalen Steuerbefehlen, bspw. gemäß dem bekannten DALI-Standard erforderlich. Darüber hinaus gibt es allerdings auch Lichtquellen, welche selbst keine Helligkeitsstörung ermöglichen, beispielsweise einfache Glühbirnen. In diesen Fällen könnte ein ferngesteuerter Dimmbetrieb trotz allem dadurch realisiert werden, dass die dem Verbraucher zugeführte Leistung entsprechend eingestellt wird. Letztendlich sollte also die Anschlusseinrichtung äußerst flexibel ausgestaltet sein, um unterschiedlichste Steuersignale zum Betreiben der angeschlossenen Verbraucher zur Verfügung zu stellen.

Um dieses Problem zu lösen, ist bei der Anschlusseinrichtung gemäß der EP 1 282 348 A1 vorgesehen, dass die Ausgangseinheiten als Erweiterungsmodule ausgebildet sind, welche an entsprechende Steckplätze der Anschlusseinrichtung eingesetzt werden können. Es stehen nunmehr unterschiedlichste Erweiterungsmodule zur Verfügung, die je nach Art des anzuschließenden Verbrauchers ausgestaltet sind, um diesem die benötigten Steuersignale bzw. eine geeignete Stromversorgung zuzuführen. Auf diese Weise besteht die Möglichkeit, die Anschlusseinrichtung individuell zu konfigurieren, um eine optimale Steuerung der angeschlossenen Verbraucher zu ermöglichen. Eine vergleichbare Lösung ist in der EP 1 489 709 A2 beschrieben, bei der ebenfalls unterschiedliche Module in ein Installationsgehäuse einer Anschlusseinrichtung eingesetzt werden können. Hierbei besteht für einen Nutzer der Anschlusseinrichtung insbesondere die Wahl zwischen einerseits einem Modul zur Erzeugung von Steuersignalen gemäß dem DALI-Standard sowie andererseits einem Modul, welches eine Relais-Steuerung ermöglicht. Schließlich beschreibt auch die WO 2004/089051 A1 eine Anschlusseinrichtung, welche durch das Einsetzen geeigneter Erweiterungsmodule in gewünschter Weise ausgestaltet werden kann.

EP 0 982 642 offenbart eine Anschlusseinrichtung mit mehreren Ausgangseinheiten für die Verbraucher, wobei jede Ausgangseinheit eine fest installierte Relais-Steuerung zum Ansteuern des entsprechenden Verbrauchers aufweist.

Ausgehend von diesem Stand der Technik liegt der vorliegenden Erfindung die Aufgabe zugrunde, eine Anschlusseinrichtung für die Hausleittechnik anzugeben, welche besonders kostengünstig zu realisieren sowie einfach zu bedienen und installieren ist, die Möglichkeit zur flexiblen Anpassung an die daran anzuschließenden Verbraucher bietet und gleichzeitig zumindest eine Grundfunktion zur Steuerung der angeschlossenen Verbrauchern ermöglicht.

Die Aufgabe wird durch eine Anschlusseinrichtung mit den Merkmalen des Anspruchs 1 gelöst. Vorteilhafte Weiterbildungen der Erfindung sind Gegenstand der Unteransprüche.

Basisgedanke der vorliegenden Erfindung ist es, die Ausgangseinheiten der erfindungsgemäßen Anschlusseinrichtung derart auszugestalten, dass zumindest eine davon eine fest installierte Relais-Steuerung zum Ansteuern des an die Ausgangseinheit angeschlossenen Verbrauchers aufweist.

Erfindungsgemäß wird also eine Anschlusseinrichtung für die Hausleittechnik vorgeschlagen, mit einer zur Kommunikation über eine Busleitung eines Hausleitsystems ausgebildeten Zentraleinheit sowie mehreren mit der Zentraleinheit verbundenen Ausgangseinheiten für an die Anschlusseinrichtung anzuschließende Verbraucher, insbesondere Leuchten oder Lampenbetriebsgeräte, wobei zumindest eine der Ausgangseinheiten eine fest installierte Relais-Steuerung zum Ansteuern des an die entsprechende Ausgangseinheit angeschlossenen Verbrauchers aufweist.

Durch die erfindungsgemäße fixe Vorinstallation einer Relais-Steuerung wird eine kostengünstig herzustellende Anschlusseinrichtung zur Verfügung gestellt, welche einfach in Betrieb zu nehmen ist und eine Ansteuerung der Verbraucher im Rahmen einer Basis-Funktion - nämlich dem Ein- und Ausschalten - ermöglicht. Gleichzeitig besteht allerdings nach wie vor eine große Flexibilität zum Anschließen unterschiedlichster Verbraucher an die Anschlusseinrichtung, da erfindungsgemäß die Ausgangseinheit mit der fest installierten Relais-Steuerung neben dem Stromanschluss für den Verbraucher zusätzlich einen parallelen Anschluss zur Übermittlung von Steuersignalen an den angeschlossenen Verbraucher aufweist. Hierzu kann die Ausgangseinheit entweder einen entsprechenden Steckplatz für ein Steuermodul zum Generieren der entsprechenden Steuersignale oder wiederum ein bereits fest installiertes Steuermodul aufweisen. Bei den auf diese weise generierten Steuersignalen handelt es sich vorzugsweise um digitale Steuersignale, insbesondere um Signale entsprechend dem DALI-Standard. Auf diese Weise wird insbesondere die Ansteuerung von Lampenbetriebsgeräten durch die Übermittlung von Helligkeitsinformationen ermöglicht, welche Helligkeitsinformationen dann von dem Lampenbetriebsgerät in geeigneter Weise umgesetzt werden.

Durch die zuvor beschriebene vorteilhafte parallele Nutzung von Relais-Steuerung und Ansteuerung mit DALI-Signalen bzw. allgemein Steuersignalen werden die Einsatzmöglichkeiten der erfindungsgemäßen Anschlusseinrichtung weiter verbessert. Es besteht nunmehr nämlich die Möglichkeit, Verbraucher, insbesondere Lampenbetriebsgeräte zur Helligkeitssteuerung mit DALI-Signalen anzusteuern und für den Fall, dass die entsprechende Leuchte ausgeschaltet wird, die Stromversorgungsleitungen für diese Leuchte vollständig stromlos zu schalten. Hierdurch wird im abgeschalteten Zustand der Leuchte das Entstehen von abstrahlenden elektromagnetischen Feldern vermieden, was aus gesundheitlichen Aspekten oftmals erwünscht ist. Ferner wird der Stromverbrauch auf ein Minimum reduziert. Diese Möglichkeit zur DALI-Ansteuerung bei gleichzeitiger Nutzung einer Relais-Steuerung ist beim Stand der Technik nicht möglich, da hier entweder ein Modul zur DALI-Ansteuerung oder ein Modul für eine Relais-Steuerung eingesetzt werden kann. Eine parallele Nutzung beider Ansteuerarten hingegen ist beim Stand der Technik nicht vorgesehen.

Eine andere vorteilhafte Weiterbildung der vorliegenden Erfindung betrifft die Nutzung der Ausgänge der Relais-Steuerung für solche Verbraucher, welche selbst nicht in der Lage sind, die Ihnen zugeführte Leistung selbstständig einzustellen. Hierunter fallen bspw. einfache Lichtquellen wie Glühbirnen oder dgl. Da oftmals auch in solchen Fällen ein Dimmen der Lichtquelle gewünscht ist, kann gemäß einem weiteren bevorzugten Ausführungsbeispiel der vorliegenden Erfindung vorgesehen sein, dass die Ausgangseinheit mit der fest installierten Relais-Steuerung zusätzlich einen Steckplatz für ein Dimm-Modul zur Steuerung der über den Stromanschluss abgegebenen Leistung aufweist. In diesem Fall sorgt also die entsprechende Ausgangseinheit dafür, dass dem Verbraucher bereits die geeignete Leistung zugeführt wird, um diesen in entsprechender Weise im Hinblick auf extern zugeführte Steuerinformationen zu betreiben. Die Nutzung eines Steckplatzes zum Anschließen eines Dimm-Moduls bringt hierbei besondere Vorteile mit sich, da Dimm-Module lediglich dann eingesetzt werden müssen, wenn sie auch tatsächlich erforderlich sind. Dies ist deshalb von Bedeutung, da derartige Dimm-Module im Vergleich zu Relais-Steuereinheiten oder DALI-Steuereinheiten deutlich teurer sind. Der Steckplatz zum Anschließen des Dimm-Moduls ist vorzugsweise als Steckplatz zum Anschließen einer Steckkarte ausgebildet. Im Vergleich zu bekannten Lösungen kann hierzu also ein ungehäustes Dimm-Modul eingesetzt werden, da dieses bereits durch das Gehäuse der Anschlusseinrichtung sowie durch die entsprechende Anschlusseinheit geschützt ist.

Vorzugsweise weist die erfindungsgemäße Anschlusseinrichtung mehrere Ausgangseinheiten mit fest installierten Relais-Steuerungen auf. Hierbei kann insbesondere vorgesehen sein, dass die Ausgangseinheiten bzw. die Zentraleinheit den angeschlossenen Verbraucher selbstständig erkennen. Diese können dann automatisch in geeigneter Weise die Umsetzung der externen Steuersignale zum Ansteuern des Verbrauchers vornehmen.

Ergänzend zu den Ausgangseinheiten zum Ansteuern vorzugsweise von Lampenbetriebsgeräten kann die erfindungsgemäße Anschlusseinrichtung darüber hinaus auch zusätzliche Ausgänge beispielsweise zum Anschließen einer Jalousie-Motoreinheit aufweisen. Eine entsprechende Ausgangseinheit ist dann als Jalousie-Steuermodul ausgebildet. Schließlich kann die Anschlusseinrichtung auch mehrere Eingänge zum Verbinden mit Eingabeelementen für die manuelle Steuerung der angeschlossenen Verbraucher aufweisen. Auf diese Weise wird die Nutzung dezentraler Eingabeelemente zum Bedienen der entsprechenden Verbraucher ermöglicht.

Nachfolgend soll die Erfindung anhand der beiliegenden Zeichnung näher erläutert werden. Es zeigen:
- Fig. 1: schematisch den Aufbau eines Hausleitsystems, bei dem erfindungsgemäße Anschlusseinrichtungen zur Verwendung kommen;
- Fig. 2: den Aufbau einer erfindungsgemäßen Anschlusseinrichtung und
- Fig. 3 bis 5: unterschiedliche Ansichten einer Platine mit den wesentlichen Komponenten der in Fig. 2 dargestellten Anschlusseinrichtung.

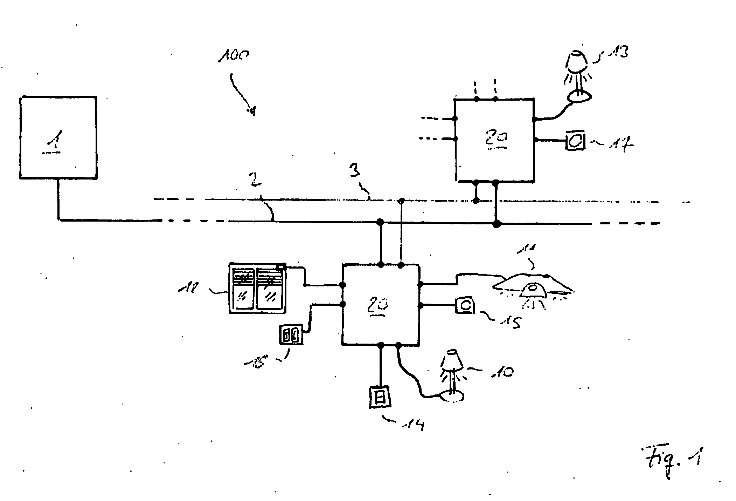

Da die zuvor beschriebene bevorzugte parallele Nutzung von DALI-Steuerung und Relais-Steuerung die Möglichkeit eröffnet, die Stromversorgungsleitungen für nicht aktivierte Verbraucher stromlos zu schalten, stellt ein bevorzugtes Anwendungsgebiet für die erfindungsgemäße Anschlusseinrichtung die Nutzung in Hotels oder ähnlichen Einrichtungen dar. Bspw. ist es in modern ausgestalteten Hotels heutzutage üblich, sämtliche innerhalb eines Zimmers bzw. einer Suite oder eines Appartements angeordnete Verbraucher stromlos zu schalten, sofern sich keine Person innerhalb des Zimmers aufhält. Hierdurch wird einerseits der Stromverbrauch minimiert, auf der anderen Seite führt dies selbstverständlich auch zu einer erhöhten Sicherheit, da das Auftreten von Kurzschlüssen oder Bränden durch das versehentliche Einschalten von Verbrauchern vermieden wird. Ein auf diese Weise gebildetes Hausleitsystem kann dann bspw. gemäß der Darstellung in Fig. 1 ausgestaltet sein.

In Fig. 1 weist das allgemein mit dem Bezugszeichen 100 versehene Hausleitsystem zunächst eine zentrale Steuereinheit 1 auf, welche an zentraler Stelle innerhalb eines Gebäudes angeordnet ist und über welche Steuerbefehle an die dezentral angeordneten Verbraucher übermittelt werden können. Die Datenübermittlung erfolgt dabei über ein mit dem Bezugszeichen 2 versehenes Busleitsystem, welches zur Übertragung von Steuerbefehlen ausgebildet ist und bspw. entsprechend dem sog. EIB-Standard (European Installation Bus) ausgestaltet sein kann. Auch andere Bussysteme für die Hausleittechnik könnten hierzu genutzt werden, beispielsweise der von der Anmelderin entwickelte sog. Luxmate-Bus.

Als dezentrale Steuereinheiten werden die erfindungsgemäßen Anschlusseinrichtungen 20 genutzt, welche bspw. jeweils in einem Zimmer oder einer Suite bzw. einem Appartement eines Hotels angeordnet sein können. Die Aufgabe dieser Anschlusseinrichtungen 20 besteht zum einen darin, die mit ihnen verbundenen Verbraucher mit Strom zu versorgen, wozu die Anschlusseinrichtungen 20 auch an das allgemeine Stromversorgungsnetz 3 angeschlossen sind. Auf der anderen Seite werden von der zentralen Steuereinheit 1 übermittelte Steuerinformationen durch die dezentralen Anschlusseinrichtungen 20 derart umgesetzt, dass die Verbraucher in ihrer jeweils spezifischen Weise angesteuert werden können. Die Anschlusseinrichtungen 20 bilden in diesem Sinne also Schnittstellen für die Befehlsübermittlung von der zentralen Steuereinheit 1 zu den Verbrauchern.

Fig. 1 zeigt bspw. eine erste - in der Darstellung untere - Anschlusseinrichtung 20, an welche drei Verbraucher 10, 11 und 12 angeschlossen sind.

Bei dem ersten Verbraucher 10 handelt es sich um eine einfache Stehleuchte, welche ausschließlich ein- und ausgeschaltet werden kann. Dies kann einerseits von der zentralen Steuereinrichtung 1 aus erfolgen, auf der anderen Seite ist auch eine lokale Ansteuerung mit Hilfe eines einfachen Lichtschalters 14 möglich. Dieser Lichtschalter 14 ist ebenfalls an die Anschlusseinrichtung 20 angeschlossen und der Leuchte 10 zugeordnet.

Ein zweiter Verbraucher ist durch eine weitere Leuchte 11 gebildet, welche intern ein höherwertiges Lampenbetriebsgerät aufweist, das ein Dimmen der darin befindlichen Lichtquelle ermöglicht. Dementsprechend ist zur lokalen Ansteuerung der Leuchte 11 nunmehr ein Dimmer 15 zur Vorgabe von Helligkeitsinformationen vorgesehen, der ebenfalls mit der Anschlusseinrichtung 20 verbunden ist. Schließlich ist als dritter Verbraucher eine Jalousie-Einheit 12 dargestellt, welche ebenfalls über die Anschlusseinrichtung 20 angesteuert wird. Zum wahlweisen Verstellen der Jalousie 12 ist wiederum ein weiteres lokales Bedienelement 16 vorgesehen.

Das in Fig. 1 dargestellte Hausleitsystem 100 weist darüber hinaus eine zweite Anschlusseinrichtung auf, welche bspw. in einem getrennten Hotelzimmer angeordnet sein kann. Schematisch dargestellt ist hier ein weiterer Verbraucher 13, der wiederum durch eine einfache Stehleuchte gebildet ist. Im Unterschied zur Stehleuchte 10 soll nunmehr allerdings die Möglichkeit bestehen, auch diese Leuchte 13 in ihrer Helligkeit einzustellen, weshalb wiederum als lokales Bedienelement ein Dimmer 17 vorgesehen ist. Die zweite Anschlusseinrichtung 20 kann selbstverständlich noch mit weiteren Verbrauchern verbunden sein, welche der Einfachheit halber nicht weiter dargestellt sind.

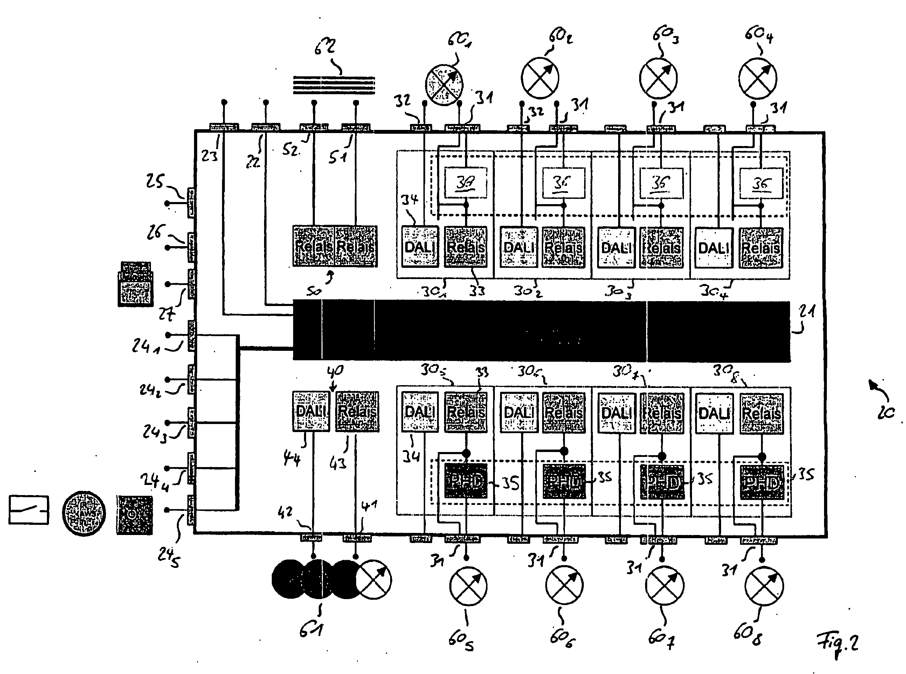

Die vielfältigen Steuerungsmöglichkeiten der erfindungsgemäßen Anschlusseinrichtung 20 werden anhand von Fig. 2 deutlich, welche näher den Aufbau der Anschlusseinrichtung 20 zeigt. Die zentrale Intelligenz der Anschlusseinrichtung 20 wird durch eine Zentraleinheit 21 gebildet, welche für die Durchführung sämtlicher Steueraufgaben verantwortlich ist. Extern eintreffende Steuerinformationen für die Verbraucher werden von der Zentraleinheit 21 umgesetzt und in geeigneter Weise an entsprechende Ausgangseinheiten übermittelt, wodurch eine individuelle Ansteuerung der einzelnen Verbraucher ermöglicht ist. Hierzu weist die erfindungsgemäße Anschlusseinrichtung 20 zunächst mehrere Eingänge auf, deren Funktion nachfolgend erläutert werden soll.

Die wichtigsten Eingänge für die Anschlusseinrichtung 20 werden durch die Anschlüsse 22 und 23 gebildet, wobei der Anschluss 22 zum Anschließen der Anschlusseinrichtung 20 an die Busleitung 2 des Hausleitsystems vorgesehen ist und Anschluss 23 den Netzeingang für die Stromversorgung bildet. Weitere Steuereingänge sind die Anschlüsse 24₁ bis 24₅, welche zum Anschließen lokaler Bedienelemente vorgesehen sind. Bei diesen Bedienelementen kann es sich gemäß den vorherigen Erläuterungen je nach Art des damit zu bedienenden Verbrauchers um einfache Ein- und Ausschalter handeln. Auch komplexere Bedienelemente bspw. zum Erzeugen von Helligkeitsbefehlen könnten auf diese Weise an die Anschlusseinrichtung 20 angeschlossen werden. Weitere denkbare Bedien- oder Steuerelemente wären Sensoren, bspw. Anwesenheits- oder Helligkeitssensoren, welche je nach Eingangssignal eine entsprechende Ansteuerung des zugeordneten Verbrauchers vornehmen. Auch Zeitschaltuhren oder vergleichbare Systeme könnten eingesetzt werden, wobei auch die Verbindung mit drahtlosen Bedienelementen denkbar wäre.

Neben diesen Eingängen, welche für die Stromversorgung sowie zum Übermitteln externer Steuerinformationen vorgesehen sind, weist die erfindungsgemäße Anschlusseinrichtung 20 ferner drei weitere Eingänge 25 bis 27 auf, wobei der Anschluss 25 zur Übermittlung von Programmierinformationen dient, bspw. um die Software bzw. Firmware der Zentraleinrichtung upzudaten, und Anschluss 26 einen potentialfreien Kontakt darstellt. Der Anschluss 27 schließlich wird zur Verbindung mit einem Key-Card-Schalter genutzt, mit dessen Hilfe die gesamte Einheit 20 aktiviert oder deaktiviert werden kann. Derartige Schalter sind - wie bereits erwähnt - in Hotels üblich, um die in einzelnen Räumen befindlichen Verbraucher zentral ein- oder auszuschalten bzw. die Stromversorgung zur Verfügung zu stellen oder zu unterbrechen.

Über die verschiedenen Eingänge können also Steuerinformationen zur Verfügung gestellt werden, welche nach Aufbereitung durch die Zentraleinheit 21 dann zum Ansteuern der einzelnen Verbraucher genutzt werden. Hierzu weist die erfindungsgemäße Anschlusseinrichtung mehrere Ausgangseinheiten auf, wobei nachfolgend zunächst die mit den Bezugszeichen 30₁ bis 30₈ bezeichneten Ausgangseinheiten näher erläutert werden sollen. Es handelt sich hierbei um diejenigen Einheiten, die primär zum Ansteuern von Leuchten oder Lampenbetriebsgeräten vorgesehen sind.

Grundsätzlich gesehen sind diesen Ausgangseinheiten 30₁ bis 30₈ jeweils zwei Ausgänge zugeordnet, zum einen ein Stromversorgungsausgang 31 sowie zum anderen ein Steuerausgang 32. Über den Stromversorgungsausgang 31 erfolgt die Stromversorgung des an den Ausgang angeschlossenen Verbrauchers, im dargestellten Ausführungsbeispiel der Lichtquellen 60₁ bis 60₈, während hingegen der Steuerausgang 32 - sofern erforderlich - zur Übermittlung von Steuersignalen genutzt wird. Wie der Darstellung in Fig. 2 entnommen werden kann, sind also die Lichtquellen 60₁ bis 60₈ entweder ausschließlich mit dem Stromversorgungsausgang 31 oder sowohl mit dem Stromversorgungsausgang 31 als auch mit dem Steuerausgang 32 verbunden.

Die Ansteuerung der Lichtquellen 60₁ bis 60₈ erfolgt nunmehr also einerseits über eine mit dem Stromversorgungsausgang 31 verbundene Relais-Steuereinheit 33 sowie andererseits für den Fall, dass das Lampenbetriebsgerät auch an den Steuerausgang 32 angeschlossen ist, über eine DALI-Steuereinheit 34. Für den Fall, dass sowohl die Relais-Steuereinheit 33 als auch die DALI-Steuereinheit 34 genutzt werden, erfolgt über den Ausgang 31 ausschließlich die Stromversorgung des zugehörigen Verbrauchers, die Steuerung selbst erfolgt mit Hilfe der über den Steuerausgang 32 übermittelten Befehle. Diese werden dann von dem Verbraucher in geeigneter Weise umgesetzt, um die Lichtquelle mit der gewünschten Leistung zu versorgen. Ein Vorteil dieser parallelen Nutzung von Stromversorgungsausgang 31 und Steuerausgang 32 besteht dann darin, dass für den Fall, dass über den Steuerausgang 32 ein Ausschalten des entsprechenden Lampenbetriebsgeräts angezeigt wird, die Stromversorgung über den Stromversorgungsausgang 31 durch die Relais-Steuereinheit 33 unterbrochen werden kann, so dass die zugehörigen Stromversorgungsleitungen vollständig stromlos geschaltet werden. Das Entstehen von abstrahlenden elektromagnetischen Feldern kann auf diese Weise verhindert werden. Ferner wird der Stromverbrauch auf ein Minimum reduziert. Im Beispiel einer parallelen DALI-Ansteuerung wird also bspw. die Stromversorgung über den Stromversorgungsausgang 31 unterbrochen, sobald über den Steuerausgang 32 der Dimmwertbefehl "0" übermittelt wird, der ein Ausschalten der Lichtquelle signalisiert.

Anzumerken ist, dass im dargestellten Ausführungsbeispiel der erfindungsgemäßen Anschlusseinrichtung 20 sowohl die Relais-Steuereinheit 33 als auch die DALI-Steuereinheit 34 jeweils fest in den acht Ausgangseinheiten 30₁ bis 30₈ installiert sind. Da diese beiden Arten von Steuereinheiten verhältnismäßig kostengünstig zu realisieren sind, wird auf diese Weise insgesamt eine relativ kostengünstige Anschlusseinrichtung geschaffen, welche eine komfortable Ansteuerung der ihr zugeordneten Verbrauchern ermöglicht. Grundsätzlich könnte allerdings auch vorgesehen sein, dass die DALI-Steuereinheiten 34 optional lediglich dann eingesetzt werden, wenn dies aufgrund des angeschlossenen Verbrauchers erforderlich ist. Sollte also ein Verbraucher eingesetzt werden, der zur Ansteuerung mittels DALI-Befehlen geeignet ist, könnte dann in einen entsprechend vorgesehen Steckplatz das DALI-Steuermodul 34 eingesetzt werden. Ferner ist darauf hinzuweisen, dass alternativ zur beschriebenen DALI-Ansteuerung auch andere Arten der digitalen oder analogen Ansteuerung genutzt werden könnten.

Bei dem Ausführungsbeispiel gemäß Fig. 2 sind nunmehr also zwei Lichtquellen 60₁ und 60₂ derart an die Anschlusseinrichtung 20 angeschlossen, dass diese Verbraucher sowohl über die Relais-Steuerung als auch über die DALI-Steuerung betrieben werden. Die beiden weiteren Verbraucher 60₃ und 60₄ hingegen werden ausschließlich über die Relais-Steuerung angesteuert und können dementsprechend ausschließlich ein- und ausgeschaltet werden. Hierbei handelt es sich bspw. um Lichtquellen, welche nicht dimmbar sind und dementsprechend nicht in der Lage sind, DALI-Befehle in geeigneter Weise zu verarbeiten. Eine Übermittlung von Dimm-Befehlen oder anderen digitalen Steuerbefehlen erübrigt sich in diesem Fall.

Auch die mit den Bezugszeichen 60₅ bis 60₈ versehenen Lichtquellen sind im dargestellten Ausführungsbeispielen nicht in der Lage, DALI-Befehle zur Helligkeitssteuerung umzusetzen. Trotz allem besteht bei diesen Lichtquellen die Möglichkeit der Helligkeitseinstellung, was dadurch erzielt wird, dass der Relais-Steuerung 33 ein zusätzliches Dimm-Modul 35 zugeordnet wird, welches in entsprechende Steckplätze 36 der Ausgangseinheiten 30₁ bis 30₈ eingesetzt werden kann. Bei dem Beispiel gemäß Fig. 2 sind also die Steckplätze 36 der unteren vier Ausgangseinheiten 60₅ bis 60₈ mit Dimm-Modulen 35 belegt während hingegen die Steckplätze 36 der vier oberen Ausgangseinheiten 30₁ bis 30₄ nicht belegt sind.

Die Dimm-Module 35 ermöglichen nunmehr, die über den Stromversorgungsausgang 31 zur Verfügung gestellte Stromversorgung in Ihrer Leistung einzustellen. Entsprechend den eintreffenden externen Steuersignalen, welche von der Zentraleinheit 21 weiterverarbeitet werden, wird somit den zugehörigen Lichtquellen 60₅ bis 60₈ automatisch Strom in einer geeigneten Leistung zur Verfügung gestellt, um die Helligkeit einzustellen. Auch diese Lichtquellen können dementsprechend nunmehr mit Hilfe des Anschlusseinrichtung 20 in ihrer Helligkeit variiert werden.

Es ist von besonderem Vorteil, dass die Dimm-Module 35 lediglich bei denjenigen Ausgangseinheiten eingesetzt werden, bei denen dies aufgrund der nachgeschalteten Verbrauchern auch tatsächlich erforderlich bzw. gewünscht ist. Der Grund hierfür ist, dass die Dimm-Module 35 im Vergleich zur Relais-Steuerung oder zur DALI-Steuerung verhältnismäßig teuer sind und dementsprechend auch lediglich dann eingesetzt werden sollen, wenn sie tatsächlich erforderlich sind. Vorzugsweise weist hierzu jede Ausgangseinheit einen als Steckkarten-Steckplatz ausgebildeten Anschluss auf, wobei dann das Dimm-Modul 35 als einfache, insbesondere ungehäuste Steckkarte ausgebildet sein kann. Auf diese Weise kann sehr einfach und kostengünstig die Funktionalität der Anschlusseinrichtung 20 an den damit verbundenen Verbraucher angepasst werden.

Letztendlich bieten also die in der zuvor beschriebenen Weise ausgebildeten Ausgangseinheiten 30₁ bis 30₈ die Möglichkeit, ihnen zugeordnete Verbraucher in flexibler Weise anzusteuern. Je nach Art des Verbrauchers können dabei Ausgangssignale unterschiedlicher Art zur Verfügung gestellt werden, um eine geeignete Ansteuerung zu übernehmen. Hierbei kann insbesondere vorgesehen sein, dass die Ausgangseinheit bzw. die Zentraleinheit 21 automatisch den Typ des angeschlossenen Verbrauchers erkennen, um eine Ansteuerung desselben in der erforderlichen Weise sicher zu stellen.

Nachfolgend sollen zwei weitere Ausgangseinheiten der erfindungsgemäßen Anschlusseinrichtung 20 näher erläutert werden, die zur Ansteuerung spezieller Verbraucher vorgesehen sind. Hierbei handelt es sich zum einen um die Ausgangseinheit 40 sowie zum anderen um die Ausgangseinheit 50.

Die Ausgangseinheit 40 weist zunächst wiederum ein Stromversorgungsausgang 41 sowie einen Steuerausgang 42 und entsprechend zugeordnet eine Relais-Steuerung 43 sowie eine DALI-Steuerung 44 auf. Die Besonderheit dieser Ausgangseinheit 40 besteht darin, dass diese zur Ansteuerung einer in ihrer Farbe veränderlichen Lichtquelle 61 vorgesehen ist. Bei derartigen Lichtquellen, die oftmals auch als sog. Wellness-Leuchten bezeichnet bzw. eingesetzt werden, ist die Übermittlung komplexerer Signal-Sequenzen wünschenswert, um eine optimierte Beleuchtung sicherzustellen. Die Ausgangseinheit 40 bietet nunmehr diese Möglichkeit, da sie in Zusammenarbeit mit der Zentraleinheit 21 für die Generierung solcher komplexerer Signalsequenzen ausgebildet ist.

Die Ausgangseinheit 50 hingegen dient zur Ansteuerung einer Jalousie 62 und weist hierzu zwei Ausgänge 51 und 52 sowie diesen zugeordnete Relais-Steuerungen 53 und 54 auf. Mit Hilfe dieser Steuerungen sowie den entsprechenden Ausgänge kann dann die Jalousie 62 nach oben oder nach unten verfahren bzw. ihre Stellung verändert werden, je nach Wunsch eines entsprechenden Benutzers.

Es besteht die Möglichkeit, die über die Eingänge 24₁ bis 24₅ eingehenden Steuerinformationen wahlweise den verschiedenen Lichtquellen bzw. Verbrauchern zuzuordnen. Die Zuordnung wird durch die Zentraleinheit 21 vorgenommen, welche dann die eintreffenden Befehle an die entsprechende Ausgangseinheit übermittelt. Gleiches gilt für über den Busanschluss 22 eintreffende Steuersignale von der zentralen Steuereinheit des Hausleitsystems. Hierzu ist vorgesehen, dass die Anschlusseinrichtung 20 eine individuelle Adresse aufweist, unter der sie durch die zentrale Steuereinheit ansprechbar ist, um eine jeweils individuelle Ansteuerung der einzelnen Verbraucher zu ermöglichen.

Die Anschlusseinrichtung 20 kann ferner eine Notfallfunktion aufweisen, um bei Auftreten von Notfällen die angeschlossenen Verbraucher in bestimmter Weise anzusteuern. Beispielsweise könnte vorgesehen sein, dass für den Fall, das die Zentraleinheit 21 - z.B. aufgrund einer über das Busleitungssystem erhaltenen Information - das Vorliegen eines Notzustands erkennt, automatisch bestimmte Leuchten aktiviert werden, um eine Notfallbeleuchtung sicherzustellen.

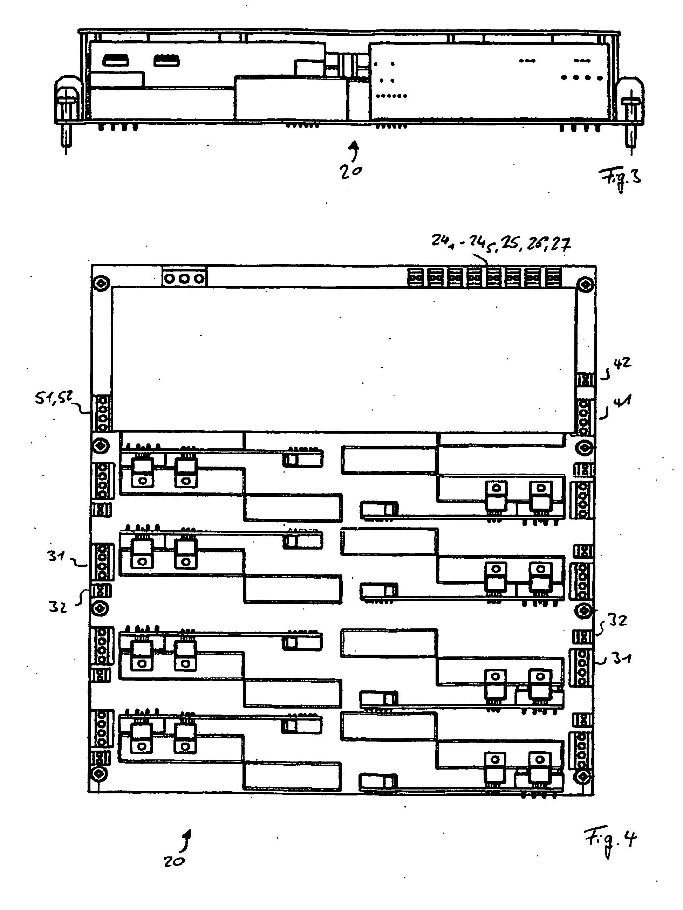

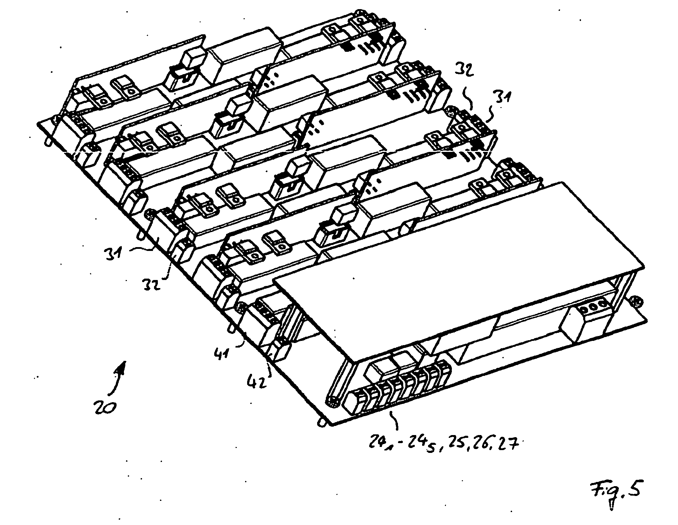

Die Figuren 3 bis 5 zeigen verschiedene Ansichten der Platine zur Bildung der erfindungsgemäßen Anschlusseinrichtung 20. Erkennbar sind insbesondere die verschiedenen Anschlüsse der unterschiedlichen Ausgangseinheiten sowie die Eingänge der Anschlusseinrichtung 20, über welche die gewünschten Steuerinformationen übermittelt werden können.

Letztendlich wird also eine Anschlusseinrichtung 20 geschaffen, welche hinsichtlich ihrer Nutzungsmöglichkeiten deutliche Vorteile gegenüber bislang bekannten Lösungen mit sich bringt. Ein weiterer Vorteil besteht in den verhältnismäßig geringen Anfangskosten zur Realisierung der Anschlusseinrichtung, wobei trotz allem bereits ohne die Nutzung entsprechender Zusatzmodule eine komfortable und individuelle Ansteuerung einzelner Verbraucher ermöglicht ist.

## Patentansprüche

1. Anschlusseinrichtung (20) für die Hausleittechnik, mit einer zur Kommunikation über eine Busleitung (2) eines Hausleitsystems (100) ausgebildeten Zentraleinheit (21) sowie mehreren mit der Zentraleinheit (21) verbundenen Ausgangseinheiten (30₁ - 30₈) für an die Anschlusseinrichtung (20) anzuschließende Verbraucher (60₁ - 60₈, 61, 62), insbesondere Leuchten oder Lampenbetriebsgeräte, wobei zumindest eine der Ausgangseinheiten (30₁ - 30₈) einen Stromversorgungsausgang mit einer fest installierte RelaisSteuerung (33) zum Ansteuern des an die entsprechende Ausgangseinheit (30₁ - 30₈) angeschlossenen Verbrauchers und einen zum Stromversorgungsausgang parallelen Anschluss (32) zur Übermittlung von Steuersignalen an den angeschlossenen Verbraucher aufweist,
**dadurch gekennzeichnet,**
**dass** die Ausgangseinheit (30₁ - 30₈) mit der fest installierten Relais-Steuerung (33) einen mit dem Stromversorgungsausgang verbundenen Steckplatz (36) für ein Dimm-Modul (35) zur Einstellung der über den Stromversorgungsausgang an den angeschlossenen Verbraucher abgegebenen Leistung aufweist.

2. Anschlusseinrichtung nach Anspruch 1,
**dadurch gekennzeichnet,**
**dass** der Steckplatz (36) zum Anschließen einer Steckkarte ausgebildet ist.

3. Anschlusseinrichtung nach Anspruch 1 oder 2,
**dadurch gekennzeichnet,**
**dass** die Ausgangseinheit (30₁ - 30₈) mit der fest installierten Relais-Steuerung einen Steckplatz für ein Steuermodul (34) zum Generieren der Steuersignale aufweist.

4. Anschlusseinrichtung nach Anspruch 1 oder 2,
**dadurch gekennzeichnet,**
**dass** die Ausgangseinheit (30₁ - 30s) mit der fest installierten Relais-Steuerung ein fest installiertes Steuermodul (34) zum Generieren der Steuersignale aufweist.

5. Anschlusseinrichtung nach einem der Ansprüche 1 bis 4,
**dadurch gekennzeichnet,**
**dass** es sich bei den Steuersignalen um digitale Steuersignale handelt.

6. Anschlusseinrichtung nach Anspruch 5,
**dadurch gekennzeichnet,**
**dass** es sich bei den Steuersignalen um Signale entsprechend dem DALI-Standard handelt.

7. Anschlusseinrichtung nach einem der vorherigen Ansprüche,
**dadurch gekennzeichnet,**
**dass** diese mehrere Ausgangseinheiten (30₁ - 30₈) mit fest installierten Relais-Steuerungen (33) aufweist.

8. Anschlusseinrichtung nach einem der vorherigen Ansprüche,
**dadurch gekennzeichnet,**
**dass** diese eine zusätzliche Ausgangseinheit (50) zum Anschließen einer Jalousie-Motoreinheit (62) aufweist.

9. Anschlusseinrichtung nach einem der vorherigen Ansprüche,
**dadurch gekennzeichnet,**
**dass** diese zumindest einen Eingang (24₁- 24₅) zum Verbinden mit einem Eingabeelement für die Steuerung eines an die Anschlusseinrichtung (21) angeschlossenen Verbrauchers aufweist.

10. Anschlusseinrichtung nach Anspruch 9,
**dadurch gekennzeichnet,**
**dass** diese mehrere Eingänge (24₁- 24₅) zum Verbinden mit Eingabeelementen aufweist, wobei die über diese Eingänge (24₁- 24₅) angeschlossenen Eingabeelemente wahlweise den verschiedenen an die Anschlusseinrichtung (20) angeschlossenen Verbrauchern zuordenbar sind.

## Claims

1. A connecting device (20) for building services control technology, having a central unit (21) that is formed to communicate by way of a bus line (2) of a building services control system (100) and also having a plurality of output units (30₁ - 30₈) that are linked with the central unit (21) for loads (60₁ - 60₈, 61, 62) that are to be connected to the connecting device (20), in particular luminaires or lamp-operating equipment, wherein at least one of the output units (30₁ - 30₈) has a current-supply output with a fixedly installed relay control (33) for activating the load that is connected to the corresponding output unit (30₁ - 30₈) and a connection (32) parallel to the current-supply output for the transmission of control signals to the connected load,
**characterised in that**
the output unit (30₁ - 30₈) with the fixedly installed relay control (33) has an insertion location (36) connected to the current-supply output for a dimmer module (35) for adjusting the power supplied to the connected load by way of the current-supply output.

2. A connecting device according to claim 1,
**characterised in that**
the insertion location (36) is formed for the connection of a plug-in card.

3. A connecting device according to claim 1 or 2,
**characterised in that**
the output unit (30₁ - 30₈) with the fixedly installed relay control has an insertion location for a control module (34) for the generation of the control signals.

4. A connecting device according to claim 1 or 2,
**characterised in that**
the output unit (30₁ - 30₈) with the fixedly installed relay control has a fixedly installed control module (34) for the generation of the control signals.

5. A connecting device according to one of claims 1 to 4,
**characterised in that**
the control signals are digital control signals.

6. A connecting device according to claim 5,
**characterised in that**
the control signals are signals in accordance with the DALI-standard.

7. A connecting device according to one of the previous claims,
**characterised in that**
it has a plurality of output units (30₁ - 30₈) with fixedly installed relay controls (33).

8. A connecting device according to one of the previous claims,
**characterised in that**
it has an additional output unit (50) for the connection of a motor unit (62) for blinds.

9. A connecting device according to one of the previous claims,
**characterised in that**
it has at least one input (24₁ - 24₅) for linking with an entry element for the control of a load that is connected to the connecting device (21).

10. A connecting device according to claim 9,
**characterised in that**
it has a plurality of inputs (24₁ - 24₅) for linking with entry elements, wherein the entry elements that are connected by way of these inputs (24₁ - 24₅) can be selectively associated with the various loads that are connected to the connecting device (20).

## Revendications

1. Dispositif de connexion (20) pour la distribution électrique dans un bâtiment avec une unité centrale (21) réalisée pour la communication par un câble de bus (2) d'un système de distribution électrique dans un bâtiment (100) ainsi que plusieurs unités de sortie (30₁-30₈) reliées à l'unité centrale (21) pour des consommateurs (60₁-60₈, 61, 62) à connecter au dispositif de connexion (20), en particulier des lampes ou des appareils fonctionnant avec des lampes, au moins l'une des unités de sortie (30₁-30₈) présentant une sortie d'alimentation électrique avec une commande par relais (33) installée fixement pour la commande du consommateur connecté à l'unité de sortie (30₁-30₈) correspondante et un raccordement (32) parallèle à la sortie d'alimentation électrique pour la transmission de signaux de commande au consommateur connecté
**caractérisé en ce**
**que** l'unité de sortie (30₁-30₈) avec la commande par relais (33) fixement installée présente un emplacement (36) relié à la sortie d'alimentation électrique pour un module DIMM (35) pour le réglage de la puissance fournie au consommateur connecté par la sortie d'alimentation électrique.

2. Dispositif de connexion selon la revendication 1,
**caractérisé en ce**
**que** l'emplacement (36) est réalisé pour connecter une carte d'extension.

3. Dispositif de connexion selon la revendication 1 ou 2,
**caractérisé en ce**
**que** l'unité de sortie (30₁-30₈) avec la commande par relais fixement installée présente un emplacement pour un module de commande (34) pour la génération des signaux de commande.

4. Dispositif de connexion selon la revendication 1 ou 2,
**caractérisé en ce**
**que** l'unité de sortie (30₁-30₈) avec la commande par relais fixement installée présente un module de commande (34) fixement installé pour la génération des signaux de commande.

5. Dispositif de connexion selon l'une quelconque des revendications 1 à 4,
**caractérisé en ce**
**qu'**il s'agit pour les signaux de commande de signaux de commande numériques.

6. Dispositif de connexion selon la revendication 5,
**caractérisé en ce**
**qu'**il s'agit pour les signaux de commande de signaux selon la norme DALI.

7. Dispositif de connexion selon l'une quelconque des revendications précédentes,
**caractérisé en ce**
**que** celui-ci présente plusieurs unités de sortie (30₁-30₈) avec des commandes par relais (33) fixement installées.

8. Dispositif de connexion selon l'une quelconque des revendications précédentes,
**caractérisé en ce**
**que** celui-ci présente une unité de sortie (50) supplémentaire pour la connexion d'une unité de moteur de store (62).

9. Dispositif de connexion selon l'une quelconque des revendications précédentes,
**caractérisé en ce**
**que** celui-ci présente au moins une entrée (24₁-24₅) pour la connexion à un élément de saisie pour la commande d'un consommateur connecté au dispositif de connexion (21).

10. Dispositif de connexion selon la revendication 9,
**caractérisé en ce**
**que** celui-ci présente plusieurs entrées (24₁-24₅) pour la connexion aux éléments de saisie, les éléments de saisie connectés par ces entrées (24₁-24₅) peuvent être associés au choix aux différents consommateurs connectés au dispositif de connexion (20).
